# FASCICULE DE BREVET EUROPEEN

(11) **EP 2 593 401 B1**
(45) Date de publication et mention de la délivrance du brevet: **05.12.2018**
(21) Numéro de dépôt: 11749464.1
(22) Date de dépôt: 11.07.2011
(51) Int. Cl.: C01B 3/00

(54) **PROCÉDÉ DE PRÉPARATION D'UN MATÉRIAU DE STOCKAGE DE L'HYDROGÈNE COMPRENANT UNE OPÉRATION DE DÉFORMATION PLASTIQUE SÉVÈRE.**
VERFAHREN ZUR HERSTELLUNG EINES MATERIALS FÜR WASSERSTOFFSPEICHERUNG MIT EINEM EXTREMEN KUNSTSTOFFVERFORMUNGSSCHRITT
METHOD FOR PREPARING A MATERIAL FOR STORING HYDROGEN, INCLUDING AN EXTREME PLASTIC DEFORMATION OPERATION

(30) Priorité: 12.07.2010 FR 1002928
(43) Date de publication de la demande: 22.05.2013
(73) Titulaire: Fruchart, Daniel, 38100 Grenoble (FR); Jomi Leman, 74890 Fessy (FR)
(72) Inventeur: FRUCHART, Daniel, 38240 Meylan (FR); MIRAGLIA, Salvatore, 38000 Grenoble (FR); DE RANGO, Patricia, 38610 Gieres (FR); SKRYABINA, Nataliya, 614068 Perm (RU); JEHAN, Michel, 74890 Fessy (FR); HUOT, Jacques, G8T 1N3 Trois-Rivières (CA); LANG, Julien, Nouveau Brunswick (CA); PEDNEAULT, Sylvain, G8V 2W4 Trois-Rivières (CA)
(74) Mandataire: Talbot, Alexandre
(86) Numéro de dépôt international: PCT/FR2011/000409
(87) Numéro de publication internationale: WO 2012/007657

(56) Documents cités:
- EP-A1- 1 167 797
- D. RODRIGO LEIVA ET AL: "Nanoscale grain refinement and H-sorption properties of MgH2 processed by high-pressure torsion and other mechanical routes", ADVANCED ENGINEERING MATERIALS - BULK NANOSTRUCTURED MATERIALS AUGUST 2010 WILEY-VCH VERLAG DEU, vol. 12, no. 8, 20 mai 2010 (2010-05-20), pages 786-792, XP002624230, DOI: 10.1002/ADEM.201000030
- AMIRA S ET AL: "Hydrogen sorption properties of Ti-Cr alloys synthesized by ball milling and cold rolling", INTERMETALLICS, ELSEVIER SCIENCE PUBLISHERS B.V, GB, vol. 18, no. 1, 1 janvier 2010 (2010-01-01), pages 140-144, XP026675371, ISSN: 0966-9795, DOI: DOI:10.1016/J.INTERMET.2009.07.004 [extrait le 2009-08-03]
- WANG J Y ET AL: "Improving the hydrogen absorption properties of commercial Mg-Zn-Zr alloy", INTERNATIONAL JOURNAL OF HYDROGEN ENERGY, ELSEVIER SCIENCE PUBLISHERS B.V., BARKING, GB, vol. 35, no. 3, 1 février 2010 (2010-02-01), pages 1250-1256, XP026874349, ISSN: 0360-3199 [extrait le 2009-12-16]
- LIMA G F ET AL: "Microstructural characterization and hydrogenation study of extruded MgFe alloy", JOURNAL OF ALLOYS AND COMPOUNDS, ELSEVIER SEQUOIA, LAUSANNE, CH, vol. 504, 15 mars 2010 (2010-03-15), pages S299-S301, XP027220344, ISSN: 0925-8388 [extrait le 2010-03-15]
- DUFOUR ET AL: "Study of Mg6Pd alloy synthesized by cold rolling", JOURNAL OF ALLOYS AND COMPOUNDS, ELSEVIER SEQUOIA, LAUSANNE, CH, vol. 446-447, 11 octobre 2007 (2007-10-11) , pages 147-151, XP022294052, ISSN: 0925-8388, DOI: DOI:10.1016/J.JALLCOM.2006.11.191

## Description

### Domaine technique de l'invention

L'invention concerne un procédé de préparation d'un matériau adapté au stockage de l'hydrogène, c'est-à-dire un matériau qui permet, soit directement, soit après au moins une étape d'activation, d'absorber l'hydrogène en vue de son stockage, de son transport et/ou de sa production. Avantageusement, le matériau adapté au stockage de l'hydrogène est un matériau adapté au stockage réversible de l'hydrogène, c'est-à-dire qu'il peut également désorber l'hydrogène sous certaines conditions.

### État de la technique

L'hydrogène est utilisé pour diverses applications chimiques industrielles, telles que la production de l'ammoniaque, le raffinage, la réalisation de plastiques etc. L'hydrogène peut également être avantageusement utilisé comme combustible (moteurs thermiques, piles à combustible), puisqu'il ne produit que de l'eau lors de sa combustion rapide ou lente, et ne libère pas de gaz à effet de serre.

Compte tenu de son volume à l'état gazeux et de son explosivité, l'hydrogène doit, cependant, être stocké sous une forme compacte et sécuritaire. Le stockage sous forme d'hydrures métalliques, en particulier de façon réversible, répond à ces critères. En effet, dans un hydrure métallique et sous des conditions de pression et de températures adaptées, l'hydrogène s'incorpore sous forme atomique dans le réseau cristallin du matériau. L'hydrogène ainsi stocké est alors récupéré en abaissant la pression ou en augmentant la température. La quantité d'hydrogène, qui peut être ainsi absorbée et désorbée dans l'hydrure métallique, est définie comme étant la capacité de stockage réversible et elle s'exprime comme le rapport, en pourcentage, de la masse d'hydrogène sur la masse de l'alliage métallique.

Un important problème qui doit être résolu pour la synthèse industrielle d'hydrures métalliques est celui de la première hydruration (ou première opération d'absorption d'hydrogène dans le matériau métallique), communément appelée phase d'activation ou première opération d'hydrogénation. En effet, habituellement, le métal ou l'alliage métallique, qui n'a jamais été hydrogéné, doit être soumis à des conditions de températures et pressions d'hydrogène plus élevées que les conditions habituelles d'équilibre thermodynamique, pour former l'hydrure correspondant. Ce phénomène est en partie expliqué par la présence d'oxydes de surface ou de toute autre barrière de nature chimique en surface, dont l'épaisseur dépend du procédé de synthèse du métal ou de l'alliage. Par exemple, cet oxyde de surface agit comme une barrière à la diffusion de l'hydrogène, qui doit être cassée afin de mettre en contact les surfaces métalliques avec l'hydrogène gazeux. Il est clair que, dans les procédés industriels, il est pratiquement impossible d'avoir une synthèse à fort volume ne produisant pas d'oxydes en surface. La (ou les) première(s) hydrogénation(s) ou activation(s) doi(ven)t donc se faire à plus haute pression d'hydrogène et à plus haute température que celle(s) du comportement thermodynamique normal, afin de forcer l'hydrogène à travers la barrière de surface. L'insertion de l'atome d'hydrogène dans le réseau métallique augmente alors le volume de celui-ci, volume qui revient ensuite à sa valeur originale lorsque les atomes d'hydrogène sont extraits du réseau lors de la phase de déshydrogénation. Donc, dans un cycle d'hydrogénation/déshydrogénation (ou cycle d'activation), le réseau cristallin subit également un cycle d'expansion/contraction volumique qui impose des contraintes mécaniques fracturant les cristallites ou particules métalliques élémentaires. Ceci a pour effet de réduire la taille des particules, d'augmenter la surface spécifique en contact avec l'hydrogène moléculaire et en particulier d'exposer des surfaces métalliques fraîches, exemptes d'oxyde surfacique. De plus, le processus d'activation induit dans le réseau cristallin des déformations généralement anisotropes, ainsi que la création de nombreuses dislocations et de défauts dans les cristallites. Un hydrure lui-même préparé par une méthode conventionnelle, c'est-à-dire typiquement lors de réactions directes gaz-métal qui peuvent être lentes ou très lentes, gagne, en terme d'activation, à subir plusieurs cycles d'hydrogénation/déshydrogénation, afin d'induire également des déformations dans son réseau cristallin et des défauts dans les cristallites.

Certains matériaux métalliques, tels que le magnésium qui présente une grande capacité de stockage de l'hydrogène (7,6% en poids), sont particulièrement difficiles à activer. La méthode conventionnelle d'activation du magnésium a, en particulier, été citée dans l'article de E. Bartman et al., Chem. Ber. 123 (1990) p1517. Cette méthode consiste à introduire une poudre de magnésium dans un autoclave. L'autoclave est ensuite évacué deux fois et pressurisé à 3 bars d'hydrogène. La pression est ensuite augmentée à 5 bars et la température de l'autoclave augmentée à 345°C. Une fois la température de 345°C atteinte, la pression d'hydrogène est augmentée à 15 bars et maintenue constante jusqu'à l'hydrogénation complète du magnésium, pour une durée totale de réaction de plus de 24 heures.

Comme les conditions à mettre en oeuvre (température, pression, durée) de cette méthode d'activation du magnésium sont assez contraignantes, certains ont cherché à faciliter cette étape d'activation, en utilisant notamment des catalyseurs. Par exemple, dans le brevet US5,198,207, il est proposé d'ajouter à la poudre de magnésium une quantité d'au moins 1,2% en poids d'hydrure de magnésium comme catalyseur, pendant l'opération d'activation, c'est-à-dire en présence d'hydrogène. Celle-ci est, en particulier, réalisée sur le mélange Mg + MgH₂, pendant plus de 7 heures, à une température supérieure ou égale à 250°C et sous une pression d'hydrogène comprise entre 5 bars et 50 bars, avec une agitation constante.

Certaines méthodes d'activation font appel au broyage mécanique sous atmosphère d'hydrogène. À titre d'exemple, Chen, Y et al (« Formation of metal hydrides by mechanical alloying » J. of Alloys et Compounds, 1995. 217 : p181-184) ont montré qu'une forte quantité d'hydrure de magnésium est produite lorsque l'on broie du magnésium sous une atmosphère d'hydrogène de 2,4 bars, pendant plus de 47 heures. Une expérience similaire a été faite par Bobet et al dans l'article « Synthesis of magnésium et titanium hydride via reactive mechanical alloying. Influence of 3d-metal addition on MgH2 synthesize » (J. of Alloys et Compounds, 2000. 298 : p. 279-284) qui ont démontré que l'addition d'un catalyseur, tel que le cobalt, améliore l'hydrogénation lors d'une activation sous hydrogène, accompagnée d'un broyage mécanique. Toutefois, ces auteurs ont rapporté que seuls les 2/3 environ du magnésium était hydruré pour un broyage d'une durée de 10 heures. Dans le brevet US6,680,042, des matériaux adaptés au stockage de l'hydrogène, tels que le magnésium, sont hydrurés par broyage mécanique sous atmosphère d'hydrogène à haute température (300°C), en présence d'un activateur d'hydrogénation, tel que le graphite. Par cette technique, il est possible d'obtenir une hydrogénation en une heure.

Il a été aussi proposé de réaliser le broyage mécanique avant l'activation du magnésium. Ainsi, Imamura et al, dans l'article « Hydriding-dehydriding behavior of magnésium composites obtained by mechanical grinding with graphite carbon » (International J. of Hydrogen Energy 25 (2000) 837-843. 5,198,207.) ont montré que, lorsque la poudre de magnésium est broyée avec du graphite, en présence de cyclohexane (CH) ou de tétrahydrofurane (THF) avec ou sans catalyseur (Pd), le composite obtenu est hydrogéné plus rapidement que le magnésium seul, lorsque le mélange, une fois broyé mécaniquement, est exposé à une atmosphère d'hydrogène de 0,7 bars, à 180°C. Le magnésium broyé avec du graphite seul, sans CH ou THF, n'absorbe que 5% en poids d'hydrogène en 20 heures. Cependant, lorsque du cyclohexane est ajouté au mélange pendant le broyage, 80% du magnésium est converti en hydrure en 20 heures de broyage.
Ces diverses méthodes réduisent le temps de la première hydrogénation en faisant subir au magnésium un broyage à haute énergie avec ou sans présence d'additifs et avec un broyage qui peut se faire sous atmosphère d'hydrogène et à haute température. Cependant, la plupart de ces méthodes n'a été testée qu'à l'échelle du laboratoire et la production de quantités industrielles par l'une ou l'autre de ces méthodes n'a pas été démontrée.
La mise au point d'équipements industriels pouvant faire du broyage à haute intensité sous atmosphère d'hydrogène et à haute température (>300°C) présente de nombreux défis technologiques et pose d'importants problèmes de sécurité, en particulier pour le magnésium qui est très réactif (pyrophorique) à l'état de poudre très fine résultant d'un broyage très prolongé.

D. Rodriogo Leiva et al. Advanced Engineering Materials - bulk nanostructured materials, vol. 12, mai 2010, pages 786-792 montre un procédé de préparation d'un matériau adapté au stockage d'hydrogène. Dans ce procédé, l'hydrure de magnésium ou le magnésium sous sa forme métallique est soumis à une déformation plastique sévère. Trois de ces types d'opérations sont décrits: forgeage à froid, laminage à froid et "High pressure torsion". Un mélange d'hydrure de magnésium et de fer peut aussi être soumis à ces opérations.

### Objet de l'invention

L'invention a pour objet de proposer un nouveau procédé de préparation d'un matériau adapté au stockage de l'hydrogène, de préférence réversible, dont la mise en oeuvre est facilitée d'un point de vue industriel, avec une augmentation avantageuse de la cinétique et du taux d'absorption d'hydrogène dans ledit matériau.

Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

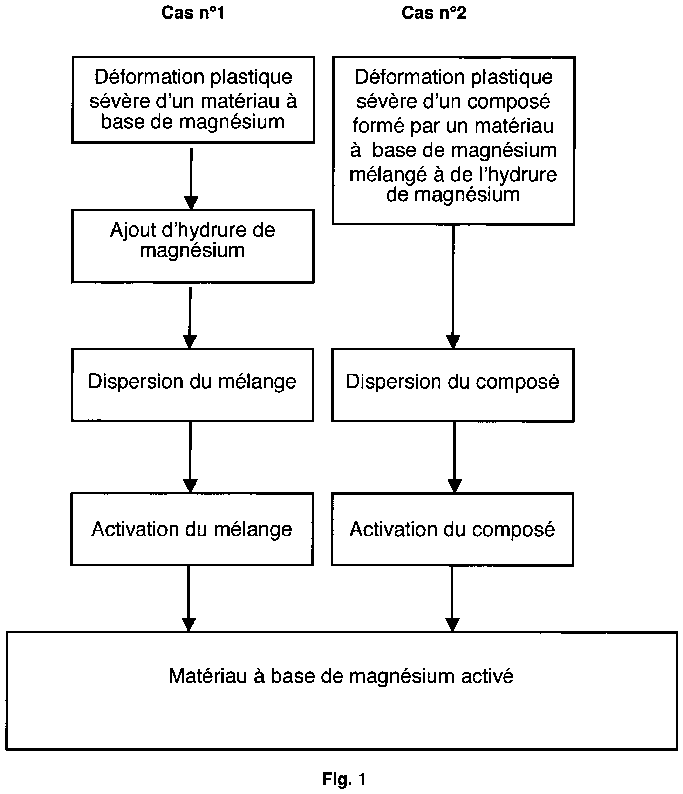

- la figure 1 illustre sous forme d'un schéma-bloc un mode de réalisation possible selon l'invention et un autre exemple de réalisation, pour la synthèse d'un matériau de stockage de l'hydrogène à base de magnésium.

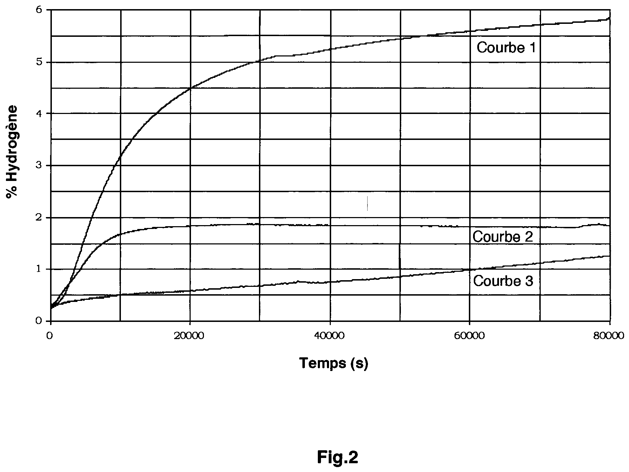

- la figure 2 est un graphique représentant les cinétiques de première absorption pour un matériau préparé selon un premier exemple de réalisation de l'invention (courbe 1) et selon deux méthodes conventionnelles données à titre de comparaison (courbes 2 et 3).

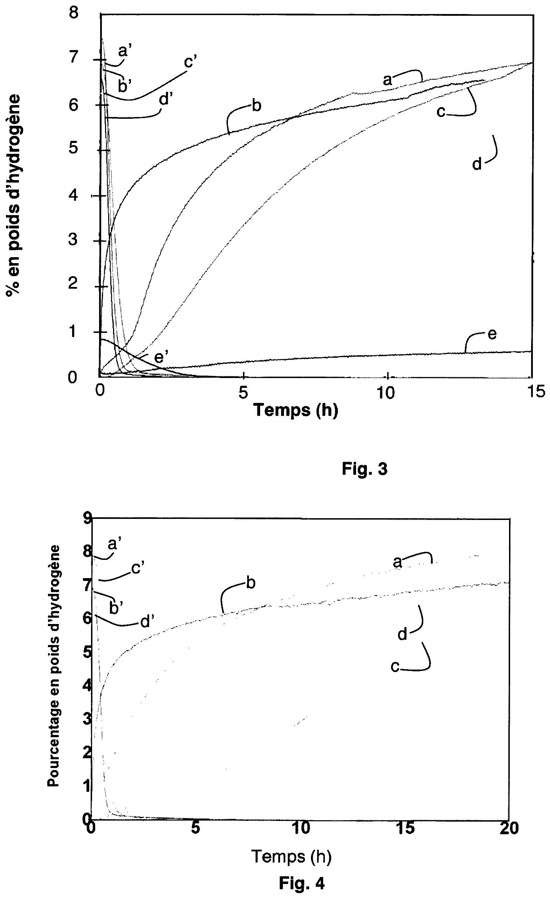

- la figure 3 est un graphique représentant les cinétiques des premier et second cycles d'absorption et de désorption d'échantillons préparés selon un second exemple de réalisation de l'invention (courbes a et a', b et b') et d'échantillons préparées selon des méthodes conventionnelles données à titre de comparaison (courbes c, c' ; d, d'et e, e').
- la figure 4 est un graphique représentant les cinétiques des premier et second cycles d'absorption et de désorption d'échantillons préparés selon un troisième exemple de réalisation de l'invention (courbes a et a', b et b') et d'échantillon préparés selon des méthodes conventionnelles données à titre de comparaison (courbes c, c' ; d, d').

### Description de modes particuliers de réalisation

Comme illustré sur la figure 1, il a été trouvé, de manière surprenante, qu'il était possible de préparer un matériau à base de magnésium particulièrement adapté au stockage réversible de l'hydrogène, en faisant subir une opération principale de déformation plastique sévère, à un matériau métallique à base de magnésium (cas n° 1 sur la figure 1), puis en ajoutant un hydrure audit matériau métallique et en réalisant une dispersion. La dispersion peut être, avantageusement, réalisée en atmosphère inerte. Par atmosphère inerte, on entend une atmosphère dépourvue de gaz susceptibles de réagir avec le matériau destiné à être dispersé et notamment exempt d'hydrogène. L'atmosphère inerte est, avantageusement, une atmosphère d'argon.

Avantageusement, le matériau métallique à base de magnésium est du magnésium sensiblement pur ou bien un alliage à base de magnésium, tel que du magnésium faiblement allié. De plus, il est, avantageusement, sous une forme non pulvérulente, par exemple sous la forme d'une pièce solide, telle qu'un lingot, une barre ou des lamelles.

L'opération de déformation plastique sévère est choisie parmi le laminage à froid, le forgeage rapide et l'extrusion coudée, qui sont trois techniques particulièrement intéressante pour mettre en oeuvre le procédé de préparation d'un point de vue industriel. Une telle opération est, de plus, une opération mécanique délivrant une énergie mécanique élevée qui est, de manière connue pour l'homme du métier, très différente de l'opération de broyage à boulet selon l'art antérieur, plus connue sous le nom anglo-saxon de « bail milling opération » et dont l'énergie mécanique est très inférieure à celle des opérations de déformation plastique sévère utilisées dans le cadre de l'invention.

Par ailleurs, dans ce premier mode de réalisation (Cas n°1 sur la figure 1) consistant à réaliser une opération de déformation plastique sévère sur le matériau à base de magnésium, cette opération est suivie d'une opération d'ajout d'un hydrure et d'une opération de dispersion.

L'hydrure ajouté est choisi de manière à contenir au moins le même métal que le métal entrant dans la composition du matériau métallique. Le matériau métallique étant, en particulier, en métal ou un alliage à base dudit métal, l'hydrure est choisi de manière à être un hydrure dudit métal ou un hydrure dudit alliage. Ainsi, pour un matériau métallique à base de magnésium, il peut s'agir d'un hydrure de magnésium ou d'un hydrure d'un alliage à base de magnésium. De plus, la proportion d'hydrure ajoutée au matériau métallique est plus particulièrement minoritaire par rapport à la proportion de matériau métallique. La proportion d'hydrure ajoutée au matériau métallique est, de préférence, comprise entre 0,5% et 10% en poids par rapport au poids total dudit matériau métallique et avantageusement entre 1% et 5%. Enfin, l'hydrure ajouté peut être un hydrure obtenu par une voie de synthèse conventionnelle de type solide-gaz, c'est-à-dire présentant des réactions d'absorption et désorption d'hydrogène particulièrement lentes. Mais, il peut aussi être un hydrure obtenu par activation du magnésium ou de l'alliage à base de magnésium (première phase d'hydrogénation en vue d'activer le matériau), par exemple dans des conditions similaires à celles décrites dans l'article précité de E. Bartman et al..

Sur la figure 1, l'opération d'ajout de l'hydrure au matériau métallique à base de magnésium est réalisée avant l'opération de dispersion. Dans ce cas, l'opération de dispersion est une opération de dispersion du mélange obtenu lors de l'ajout de l'hydrure au matériau métallique. Par contre, l'opération d'ajout de l'hydrure au matériau métallique peut aussi être réalisée pendant l'opération de dispersion. Dans ce second cas, l'opération de dispersion permet de disperser en premier lieu le matériau métallique, puis le mélange obtenu lors de l'ajout. Dans les deux cas, l'opération de dispersion permet d'affiner la granulométrie du matériau métallique et d'obtenir une bonne dispersion entre le matériau métallique et l'hydrure.

Une telle opération de dispersion peut, avantageusement, être une opération de broyage mécanique pendant une durée inférieure ou égale à une heure et avantageusement d'environ 30 minutes.

Comme illustré sur la figure 1, une fois l'opération de dispersion du mélange réalisée, par exemple sous atmosphère inerte, celui-ci est plus particulièrement soumis à la première opération d'hydrogénation, en autoclave, dans le but d'activer le matériau métallique. Avant cette première opération d'hydrogénation, le mélange peut d'abord être déshydrogéné pour désorber l'hydrogène de l'hydrure ajouté préalablement.

Dans ce mode de réalisation (Cas n°1), l'hydrure a été ajouté après l'opération de déformation plastique sévère. Il est possible d'envisager comme représenté par le Cas n° 2 sur la figure 1, d'ajouter l'hydrure au matériau métallique non pas après l'opération de déformation plastique sévère, mais avant celle-ci. Dans ce cas, le matériau subissant l'opération de déformation plastique sévère est formé d'un composé comprenant le matériau métallique à base de magnésium et ledit hydrure. Comme dans le cas n°1, l'hydrure ajouté est choisi de manière à contenir au moins le même métal que le métal entrant dans la composition du matériau métallique. L'hydrure est donc un hydrure dudit métal ou un hydrure d'un alliage à base dudit métal. De plus, comme dans le Cas n°1, la proportion en poids d'hydrure ajoutée au matériau métallique à base de magnésium est en particulier minoritaire par rapport au poids total dudit matériau métallique. Avantageusement, la proportion d'hydrure ajoutée au matériau métallique à base de magnésium est, de préférence, comprise entre 0,5% et 10% en poids par rapport au poids total dudit matériau métallique et avantageusement entre 1% et 5%. Enfin, l'hydrure ajouté peut être un hydrure obtenu par une voie de synthèse conventionnelle de type solide-gaz, c'est-à-dire présentant des réactions d'absorption et désorption d'hydrogène particulièrement lentes. Mais, il peut aussi être un hydrure obtenu par activation du magnésium ou de l'alliage à base de magnésium (première phase d'hydrogénation en vue d'activer le matériau), par exemple dans des conditions similaires à celles décrites dans l'article précité de E. Bartman et al.. Par ailleurs, le composé subissant l'opération de déformation plastique sévère est, de préférence, sous la forme d'une pièce solide, par exemple obtenue par compactage du matériau métallique auquel a été préalablement ajouté l'hydrure. Ledit matériau métallique, avant l'ajout de l'hydrure et formation du composé, peut lui-même avoir subit une opération de déformation plastique sévère. Dans ce cas, cette opération peut éventuellement être continue à l'opération de déformation plastique sévère réalisée sur le composé. L'ajout d'hydrure est, alors, réalisé pendant une opération de déformation plastique sévère englobant celle réalisée sur le matériau métallique seul et celle réalisée sur le composé. Alternativement, elle peut aussi être séquentielle avec un arrêt pour ajouter l'hydrure et former le composé. Par ailleurs, comme dans le cas n°1, le composé ayant subit l'opération de déformation plastique sévère choisie parmi le laminage à froid, le forgeage rapide et l'extrusion coudée, subit ensuite, avantageusement, une opération de dispersion dudit composé, par exemple en atmosphère inerte, et/ou une opération de première hydrogénation en vue d'activer ledit composé.

Il a été constaté qu'un procédé mettant en oeuvre une opération principale de déformation plastique sévère choisie parmi le laminage à froid, le forgeage rapide et l'extrusion coudée sur un matériau métallique à base de magnésium, associé à l'ajout (préalable ou ultérieur) d'une quantité (de préférence minoritaire) d'hydrure comprenant du magnésium permet de proposer un nouveau procédé de préparation d'un matériau adapté au stockage de l'hydrogène industrialisable et facile à mettre en oeuvre. De plus, l'ajout d'hydrure, avant la phase d'activation, permet d'augmenter les cinétiques d'absorption et de désorption de l'hydrogène au cours des cycles suivant l'activation du matériau. Il permet également d'obtenir un taux d'hydrogène absorbé élevé, proche de la valeur théorique maximale d'absorption massique.

Trois exemples de réalisation ont été réalisés pour illustrer l'invention.

Selon un premier exemple de réalisation de l'invention, un lingot de magnésium commercialisé par Norsk Hydro d'une pureté de 99,99% a subi une opération de déformation plastique sévère par laminage à froid. L'opération de laminage à froid a été réalisée par une pluralité de passages successifs dans un laminoir de la marque Durston, possédant des rouleaux de 50 mm de diamètre. Le lingot de magnésium est sous la forme d'une plaque d'une épaisseur de 0,5 mm avant le laminage. De plus, après chaque passage entre les rouleaux du laminoir, la plaque était repliée en deux avant le passage suivant dans le laminoir. La réduction d'épaisseur était ainsi de 50% à chaque laminage. De plus, l'opération de laminage a été réalisée à l'air environnant.

Après 50 passages successifs dans le laminoir, le magnésium a été mélangé avec 5% en poids d'hydrure de magnésium (Sigma Aldrich, 99% pur). Le mélange a ensuite subi une étape de dispersion par broyage mécanique, en utilisant un broyeur de modèle SPEX , pendant 30 minutes, dans un creuset sous atmosphère d'argon.

Après broyage, le mélange broyé a été placé dans un réacteur couplé à un système de mesure de la quantité d'hydrogène. Le réacteur a été premièrement chauffé à 350°C tout en pompant continuellement. Cette étape permet de désorber le MgH₂ additionnel. Les particules de Mg ainsi obtenues serviront de point de nucléation à l'ensemble du matériau lors de la phase d'hydrogénation suivante. Cette étape de désorption a duré environ 3 heures. Une pression d'hydrogène de 20 bars a ensuite été appliquée sur l'échantillon et la quantité d'hydrogène absorbée a été mesurée en fonction du temps comme représenté par la courbe 1 (Echantillon 1) sur la figure 2.

À titre de comparaison, un échantillon de magnésium non laminé et non broyé (Echantillon 2) a été hydrogéné de la même façon (Courbe 2 sur la figure 2). Dans ce cas, l'absorption s'arrête à environ 1,8% en poids. Ceci est probablement dû au fait que l'hydrogénation n'est réalisée qu'a la surface des particules de magnésium. Une fois la surface hydrogénée, l'hydrogène externe doit alors diffuser à travers la phase hydrure de surface du magnésium ce qui est très lent. Par ailleurs, un autre échantillon (Echantillon 3) a subi les mêmes étapes de préparation que l'échantillon 1, à l'exception de l'ajout d'hydrure de magnésium. Comparée à la courbe 1, la courbe 3 illustrant la première hydrogénation dudit échantillon sur la figure 2 nous montre que l'absorption d'hydrogène est très lente pour l'échantillon 3. Ainsi, le fait d'ajouter une petite quantité d'hydrure de magnésium au lingot de magnésium et de réaliser un broyage mécanique énergique au mélange permet à la migration de l'hydrogène de bénéficier des effets de déformation plastique sévère du matériau ici traité à l'état massif. De plus, le pourcentage d'hydrogène absorbé au cours de la première hydrogénation est très supérieur pour l'échantillon 1 en comparaison aux échantillons 2 et 3.

Selon un deuxième exemple de réalisation, des barreaux d'alliage de magnésium de type industriel type AZ31 (ou ZK60) ont subi une étape de déformation plastique sévère par extrusion dans une filière coudée également connue sous l'acronyme anglo-saxon ECAP (Equal Channel Angular Pressing).

Les alliages AZ31 ou ZK60 sont des alliages dits de construction, utilisés en général pour leurs propriétés mécaniques découlant de l'ajout de métaux additifs en faibles quantités. L'alliage AZ31 contient environ 3% d'Al et 1% de Zn, tetis que l'alliage ZK60 contient environ 6% de Zr. Ces alliages sont des produits courants employés pour les techniques de constructions légères (avionique, automobile en particulier) et sont d'un coût très intéressant. Ils présentent, par ailleurs, des propriétés mécaniques fortes qui sont mises à profit lors de la mise en oeuvre de techniques de déformation plastique sévère et en particulier l'ECAP, qui est une des plus contraignantes d'un point de vue métallurgique.

Plusieurs méthodes de filage peuvent être mises en oeuvre avec l'ECAP selon que l'on tourne le barreau filé autour de son axe (direction de filage) entre deux passes successives ou non. Dans la méthode utilisée selon le deuxième exemple de réalisation, la tête ECAP a été conçue par la société «Poinsard Design» (Besançon, France), avec une presse de 30 tonnes développée par la société «La Savoisienne de Vérins» (Alberville, France). De plus, les barreaux d'alliages avaient les dimensions suivantes : 11x11x70 mm. Ils ont été passés plusieurs fois par extrusion ECAP selon le mode dit A (sans rotation) ou le mode dit Bc (avec rotation de 90° entre chaque passe). L'angle du coude de la filière est ajustable et a été choisi proche de 90° (exactement 105°) pour délivrer une déformation maximale dans des conditions opératoires pratiques. Le premier mode utilisé est un mode de déformation anisotrope puisque l'on cumule successivement l'effet des déformations sévères, le deuxième mode est un mode isotrope puisque l'on alterne l'effet des déformations plastiques sévères par rotation du barreau. L'extrusion ECAP a été effectuée à différentes températures (de l'ambiante à 300°C), grâce à une dispositif auxiliaire et pour un nombre de passes variant de 1 à 15 (durée d'une extrusion < 1 seconde sans compter le temps de la manipulation pour réintroduire le barreau dans l'entrée de la filière). L'ensemble des opérations a été conduit à l'air ambiant, y compris la mise en température des barreaux. La température de fonctionnement a été optimisée par la suite entre 175° et 225°C selon les propriétés plastiques/ductiles de l'alliage considéré. Le nombre de passes successives a été, par la suite, utilement réduit à 3 voir 2 passes.

Les barreaux d'alliages ainsi traités par déformation plastique sévère de type ECAP sont devenus très fragiles (cassant à la main) et ont été mélangés avec 5% en poids d'hydrure de magnésium (Sigma Aldrich, 99% pur). Le mélange a ensuite été broyé mécaniquement en utilisant un broyeur de modèle SPEX 8000 pendant une durée de 30 à 60 minutes, dans un creuset sous atmosphère d'argon. Après broyage, le mélange broyé a été placé dans un réacteur et traité selon la procédure d'hydrogénation décrite dans le premier exemple de réalisation.

Sur la figure 3 ont été reportées les premier et second cycles d'absorption et de désorption, sous 20 bars de pression d'hydrogène, des échantillons AZ31 passés par ECAP (route A, 8 fois) puis ensemencés par additif de MgH₂ et broyés mécaniquement pendant 30 minutes (Courbes a et b respectivement pour les premier et second cycles d'absorption et Courbes a' et b' respectivement pour les premier et second cycles de désorption). À titre de comparaison, les mêmes courbes ont été rapportées pour des mêmes échantillons AZ31 passés par ECAP, mais non ensemencés et également passés par un broyage mécanique (Courbes c et d pour les 1^{er} et 2^{ème} cycles d'absorption et c' et d' pour les 1^{er} et 2^{ème} cycles de désorption) et finalement pour le même échantillon AZ31 non passé par ECAP, non ensemencé et non traité (lignes e et e'). Les courbes de désorption opérée sous vide et à 300°C sont dans ces conditions naturellement plus serrées, mais elles reflètent la même disposition avantageuse pour les échantillons ayant subit les mêmes opérations menées selon le procédé du deuxième exemple de réalisation en comparaison aux deux autres échantillons.

De la même manière, les courbes reportées sur la figure 4 permettent de comparer le premier cycle et le second cycle d'absorption sous 20 bars de pression d'hydrogène, puis de désorption d'échantillons AZ31 passé par ECAP (route Bc, 3 fois), puis ensemencés par additif de MgH₂ au broyeur mécanique SPEX pendant 30 minutes (lignes a et b et a' et b') en comparaison aux mêmes échantillons non passés par ECAP et non ensemencés mais broyés mécaniquement (lignes c et d et c' et d').

Les réactions sont extrêmement lentes, lorsque l'alliage n'a subit aucun traitement. Elles restent aussi lentes lorsque le matériau a été soit simplement broyé mécaniquement, sans ensemencement qu'il ait été traité ou non traité par déformation plastique sévère.

Comme reporté aux figures 3 et 4, la comparaison entre le type de passage A (déformation anisotrope) ou Bc (déformation isotrope) pour l'opération de déformation plastique sévère initiale (SPD - ECAP) révèle également une différence initiale dans les premiers temps de l'hydrogénation avec un palier de nucléation marquant le procédé par passage A. Il faut aussi noter qu'à la première hydrogénation, la charge théorique maximale de 7.6% est atteinte. Ces résultats, comme pour la méthode de Laminage à Froid (CR) du premier exemple de réalisation, démontrent la synergie inattendue des effets de la déformation plastique sévère initiale et de l'ensemencement par MgH₂ qui conduit à de bien meilleurs résultats que toutes les méthodes connues et opérées précédemment.

Selon un troisième exemple, des barreaux d'alliage de magnésium de type AZ31 (ou ZK60) ou de magnésium industriel pur ont été forgés très rapidement par une presse à merlin. La presse à merlin comprend une masse de 150 kg pouvant tomber librement d'une hauteur variable, pouvant aller jusqu'à 1,5 mètres au-dessus d'un piston pénétrant dans une chambre de travail. La masse vient alors frapper l'échantillon placé sur un support fixe à la base interne de ladite chambre de travail. Dans la méthode utilisée, la forge rapide est constituée d'un bras relevant, selon un appareil conçu par la société Rabaud (Sainte Cécile, France). L'échantillon forgé peut être chauffé à une température adaptée aux propriétés mécaniques de l'alliage ou du métal (par exemple au voisinage du comportement fragile ductile, température déterminée par ailleurs) par une boucle d'induction parcourue par un courant électrique de haute fréquence (générateur de marque Céles). La chambre de forgeage peut alors être placée sous vide, sous gaz neutre ou encore dans l'atmosphère ambiante, selon la température et le mode opératoire choisis. Les processus de déformation plastique sévère peuvent être enregistrés lors du forgeage grâce à une fenêtre optique et une caméra rapide placée à l'extérieur. On assure des conditions de forgeage rapide propres à développer dans le réseau cristallin une haute densité de déformations généralement anisotropes, la création de nombreuses dislocations et de défauts dans les cristallites et la réduction de la taille des cristallites à des dimensions sub-micrométriques, lorsque la vitesse du forgeage est au moins de 10 m/s, et que la réduction de taille du lingot au forgeage est typiquement de 1/5, préférentiellement de 1/10.

Le matériau ainsi forgé est ensuite traité comme dans les premier et second exemples de réalisation décrits précédemment. 5% en poids d'hydrure de magnésium (Sigma Aldrich, 99% pur ou McPHy-Energy, 99% pur) sont ajoutés au matériau après la réalisation du forgeage rapide. Le mélange a ensuite été broyé mécaniquement en utilisant un broyeur de modèle SPEX 8000, pendant 30 à 60 minutes dans un creuset sous atmosphère d'argon. Après broyage, le mélange broyé a été placé dans un réacteur et traité selon la procédure d'hydrogénation décrite dans le premier exemples de réalisation. Les courbes d'hydrogénation et de déshydrogénation obtenues sont tout à fait semblables à celles reportées à la figure 3 de l'exemple précédent et pour l'alliage de référence AZ31, et comparant le premier et le second cycle d'absorption sous 20 bars de pression d'hydrogène puis de désorption de l'échantillon.

Les exemples ci-dessus ont été réalisés avec du magnésium ou des alliages de magnésium. Cependant, un tel procédé de préparation d'un matériau adapté au stockage de l'hydrogène peut être utilisé avec d'autres matériaux métalliques que le magnésium et les alliages à base de magnésium. En particulier, le matériau adapté au stockage de l'hyrdrogène peut être un alliage à base d'aluminium. Il peut, de manière plus générale appartenir à l'un des groupes non limitatifs suivants :
1) les éléments choisi parmi Li, Be, B, Na, Mg, Si, K, Ca, Sc, Ti, V, Cr, Mn, Ni, Cu, Zn, Ga, Rb, Sr, Y, Zr, Nb, Pd, Cs, Ba, La, Hf, Ta, Ce, Pr, Nd, Sm, Gd, Tb, Dy, Ho, Er, Tm, Yb, Lu, Ac, Th et U.
2) les alliages de type AB₅, dans lesquels :
   - A est au moins un élément choisi parmi La, Ca, Y, Ce, Mm, Pr, Nd, Sm, Eu, Gd, Yb et Th,
   - B est au moins un élément choisi parmi Ni, Al, Co, Cr, Cu, Fe, Mn, Si, Ti, V, Zn, Zr, Nb, Mo et Pd.
3) les alliages à structure de phase Laves, de type AB₂ dans lesquels :
   - A est au moins un élément choisi parmi Ca, Ce, Dy, Er, Gd, Ho, Hf, La, Li, Pr, Sc, Sm, Th, Ti, U, Y et Zr; et
   - B est au moins un élément choisi parmi Ni, Fe, Mn, Co, Al, Rh, Ru, Pd, Cr, Zr, Be, Ti, Mo, V, Nb, Cu et Zn.
4) les alliages de type AB, dans lesquels :
   - A est au moins un élément choisi parmi Ti, Er, Hf, Li, Th, U et Zr; et
   - B est au moins un élément choisi parmi Fe, Al, Be, Co, Cr, Mn, Mo, Nb et V.
5) les alliages de structure cubique à corps centré, tels que décrits dans la demande US5968291.

## Revendications

1. Procédé de préparation d'un matériau adapté au stockage de l'hydrogène,
**caractérisé en ce qu'**il comprend :
- la fourniture d'un matériau métallique choisi parmi un métal et un alliage à base dudit métal,
- la réalisation d'une opération de déformation plastique sévère choisie parmi le laminage à froid, le forgeage rapide et l'extrusion coudée sur le matériau métallique
- l'ajout au matériau métallique d'un hydrure dudit métal ou d'un hydrure dudit alliage et d'une opération de dispersion après l'opération de déformation plastique sévère réalisée sur le matériau métallique.

2. Procédé selon la revendication 1, **caractérisé en ce que**, lorsque l'opération de déformation plastique sévère est réalisée sur le matériau métallique, elle est suivie d'une opération d'ajout au matériau métallique d'un hydrure dudit métal ou d'un hydrure dudit alliage et d'une opération de dispersion en atmosphère inerte.

3. Procédé selon l'une des revendications 1 et 2, **caractérisé en ce que** le matériau métallique est choisi parmi le magnésium, les alliages à base de magnésium, les alliages à base d'aluminium, les alliages de structure cubique à corps centré, les alliages à structure de phase Laves, les alliages de type AB₅ et les alliages de type AB.

4. Procédé selon l'une quelconque des revendications 1 à 3, **caractérisé en ce que** le matériau métallique ou le composé subissant l'opération de déformation plastique sévère est sous la forme d'une pièce solide.

5. Procédé selon l'une quelconque des revendications 1 à 4, **caractérisé en ce que** l'opération d'ajout au matériau métallique de l'hydrure est réalisée pendant l'opération de dispersion.

6. Procédé selon l'une quelconque des revendications 1 à 4, **caractérisé en ce que** l'opération d'ajout audit matériau métallique de l'hydrure est réalisée avant l'opération de dispersion.

7. Procédé selon l'une quelconque des revendications 1 à 6, **caractérisé en ce que** l'opération de dispersion est suivie d'une première opération d'hydrogénation dudit mélange en vue d'activer ledit mélange.

8. Procédé selon l'une quelconque des revendications 1 à 4, **caractérisé en ce que** l'opération de déformation plastique sévère réalisée sur le composé à base de matériau métallique et d'hydrure est suivie d'une première opération d'hydrogénation dudit composé, en vue d'activer ledit composé.

9. Procédé selon la revendication 8, **caractérisé en ce qu'**une opération de dispersion est réalisée entre l'opération de déformation plastique sévère et la première opération d'hydrogénation dudit composé.

10. Procédé selon la revendication 9, **caractérisé en ce que** l'opération de dispersion, réalisée entre l'opération de déformation plastique sévère et la première opération d'hydrogénation dudit composé, est réalisée en atmosphère inerte.

11. Procédé selon l'une quelconque des revendications 1 à 10, **caractérisé en ce que** l'opération de dispersion est réalisée par broyage mécanique inférieure ou égale à une heure.

12. Procédé selon l'une quelconque des revendications 1 à 11, **caractérisé en ce que** l'hydrure ajouté au matériau métallique est obtenu par une opération d'hydrogénation dudit matériau métallique, en vue d'activer ledit matériau métallique, réalisée préalablement audit ajout.

13. Procédé selon l'une quelconque des revendications 1 à 12, **caractérisé en ce que** la proportion d'hydrure ajouté au matériau métallique est comprise entre 0,5% et 10% en poids par rapport au poids total du matériau métallique et préférentiellement entre 1% et 10% en poids.

## Patentansprüche

1. Verfahren zur Herstellung eines zum Speichern von Wasserstoff geeigneten Materials,
**dadurch gekennzeichnet, dass** es umfasst:
- die Zurverfügungstellung eines Materials, das aus einem Metall oder einer Legierung auf Basis dieses Metalls ausgewählt ist,
- einen SPD (severe plastic deformation)-Schritt, der ausgewählt ist aus Kaltwalzen, Schnellschmieden und Angular Extrusion an dem Metallwerkstoff,
- Hinzufügen eines Hydrids des genannten Metalls oder eines Hydrids der genannten Legierung zu dem genannten Metallwerkstoff sowie eines Dispersionsvorgangs nach dem an dem Metallwerkstoff vorgenommenen SPD-Schritt.

2. Verfahren nach Anspruch 1, **dadurch gekennzeichnet, dass**, wenn der SPD-Vorgang an dem Metallwerkstoff vorgenommen wird, diesem ein Vorgang des Zusetzens eines Hydrids des genannten Metalls oder eines Hydrids der genannten Legierung zu dem Metallwerkstoff sowie ein Dispersionsvorgang in Inertatmosphäre folgen.

3. Verfahren nach einem der Ansprüche 1 und 2, **dadurch gekennzeichnet, dass** der Metallwerkstoff ausgewählt ist aus Magnesium, Legierungen auf Basis von Magnesium, Aluminium, Legierungen auf Basis von Aluminium, kubisch strukturierten, körperzentrierten Legierungen, Legierungen mit Laves-Phasenstruktur, Legierungen vom Typ AB5 und Legierungen vom Typ AB.

4. Verfahren nach einem der Ansprüche 1 bis 3, **dadurch gekennzeichnet, dass** der Metallwerkstoff oder die Verbindung, die dem SPD-Vorgang unterzogen wird, in Form eines massiven Teils vorliegt.

5. Verfahren nach einem der Ansprüche 1 bis 4, **dadurch gekennzeichnet, dass** der Schritt des Zusetzens des Hydrids zum Metallwerkstoff während des Dispersionsvorgangs erfolgt.

6. Verfahren nach einem der Ansprüche 1 bis 4, **dadurch gekennzeichnet, dass** der Schritt des Zusetzens des Hydrids zum Metallwerkstoff vor dem Dispersionsvorgang erfolgt.

7. Verfahren nach einem der Ansprüche 1 bis 6, **dadurch gekennzeichnet, dass** der Schritt der Dispersion gefolgt ist von einem ersten Hydrierungsvorgang des genannten Gemischs im Hinblick auf ein Aktivieren dieses Gemischs.

8. Verfahren nach einem der Ansprüche 1 bis 4, **dadurch gekennzeichnet, dass** der an der Verbindung auf Basis eines Metallwerkstoffs vorgenommene SPD-Vorgang gefolgt ist von einem ersten Hydrierungsvorgang dieser Verbindung im Hinblick auf das Aktivieren dieser Verbindung.

9. Verfahren nach Anspruch 8, **dadurch gekennzeichnet, dass** ein Dispersionsvorgang zwischen dem SPD-Vorgang und dem ersten Hydrierungsvorgang der genannten Verbindung stattfindet.

10. Verfahren nach Anspruch 9, **dadurch gekennzeichnet, dass** der Dispersionsvorgang, der zwischen dem SPD-Vorgang und dem ersten Hydrierungsvorgang der genannten Verbindung stattfindet, in Inertatmosphäre erfolgt.

11. Verfahren nach einem der Ansprüche 1 bis 10, **dadurch gekennzeichnet, dass** der Dispersionsvorgang durch mechanisches Zerkleinern während genau einer Stunde oder weniger erfolgt.

12. Verfahren nach einem der Ansprüche 1 bis 11, **dadurch gekennzeichnet, dass** das dem Metallwerkstoff zugesetzte Hydrid durch einen Hydrierungsvorgang des genannten Metallwerkstoffs im Hinblick auf das Aktivieren dieses Metallwerkstoffs erhalten wird, der vor dem genannten Zusetzen erfolgt.

13. Verfahren nach einem der Ansprüche 1 bis 12, **dadurch gekennzeichnet, dass** der Anteil des dem Metallwerkstoff zugesetzten Hydrids 0,5 bis 10 Gew.-% bezogen auf das Gesamtgewicht des Metallwerkstoffs und vorzugsweise 1 bis 10 Gew.-% beträgt.

## Claims

1. A method for preparing a material suitable for storing hydrogen, **characterized in that** it comprises:
- providing a metallic material selected from among a metal and an alloy containing said metal,
- performing an extreme plastic deformation operation selected from among cold-rolling, quick forging and extrusion bending performed on the metallic material:
- adding a hydride of said metal or a hydride of said alloy to the metallic material and a dispersing operation after carrying out the extreme plastic deformation operation on the metallic material.

2. The method according to claim 1, **characterized in that**, when the extreme plastic deformation operation is carried out on the metallic material, it is followed by an operation of adding, to the metallic material, a hydride of said metal or of a hydride of said alloy, and by a dispersing operation in an inert atmosphere.

3. The method according to any of claims 1 and 2, **characterized in that** the metallic material is selected from among magnesium, alloys containing magnesium, alloys containing aluminum, alloys of body-centered cubic structure, alloys of Laves phase structure, AB₅-type alloys, and AB-type alloys.

4. The method according to any one of claims 1 to 3, **characterized in that** the metallic material or the compound submitted to the extreme plastic deformation operation is in the form of a solid piece.

5. The method according to any one of claims 1 to 4, **characterized in that** the operation of adding, to the metallic material, the hydride is carried out during the dispersing operation.

6. The method according to any one of claims 1 to 4, **characterized in that** the operation of adding the hydride to said metallic material is carried out before the dispersing operation.

7. The method according to any one of claims 1 to 6, **characterized in that** the dispersing operation is followed by a first operation of hydrogenation of said mixture to activate said mixture.

8. The method according to any one of claims 1 to 4, **characterized in that** the extreme plastic deformation carried out on the compound containing metallic material and hydride is followed by a first operation of hydrogenation of said compound, to activate said compound.

9. The method according to claim 8, **characterized in that** a dispersing operation is carried out between the extreme plastic deformation and the first operation of hydrogenation of said compound.

10. The method according to claim 9, **characterized in that** the dispersing operation, carried out between the extreme plastic deformation and the first operation of hydrogenation of said compound, is performed in an inert atmosphere.

11. The method according to any one of claims 1 to 10, **characterized in that** the dispersing operation is carried out by a mechanical grinding shorter than or equal to one hour.

12. The method according to any one of claims 1 to 11, **characterized in that** the hydride added to the metallic material is obtained by an operation of hydrogenation of said metallic material to activate said metallic material, performed prior to said addition.

13. The method according to any one of claims 1 to 12, **characterized in that** the proportion of hydride added to the metallic material ranges between 0.5% and 10% by weight with respect to the total weight of the metallic material and preferentially between 1% and 10% by weight.
